# EUROPÄISCHE PATENTSCHRIFT

(11) **EP 4 419 841 B1**
(45) Veröffentlichungstag und Bekanntmachung des Hinweises auf die Patenterteilung: **03.06.2026**
(21) Anmeldenummer: 22818309.1
(22) Anmeldetag: 16.11.2022
(51) Int. Cl.: F22B 1/00, F01K 25/00

(54) **ANLAGE MIT SCHNELLDAMPFERZEUGER**
INSTALLATION WITH QUICK STEAM GENERATOR
INSTALLATION POURVUE DE GÉNÉRATEUR DE VAPEUR INSTANTANÉ

(30) Priorität: 17.12.2021 EP 21215623
(43) Veröffentlichungstag der Anmeldung: 28.08.2024
(73) Patentinhaber: Siemens Energy Global GmbH & Co. KG, 81739 München (DE)
(72) Erfinder: BRÜCK, Stefan, 45470 Mülheim an der Ruhr (DE); STÜER, Carmen, 45721 Haltern Hullern (DE)
(86) Internationale Anmeldenummer: PCT/EP2022/082066
(87) Internationale Veröffentlichungsnummer: WO 2023/110265

(56) Entgegenhaltungen:
- DE-A1- 102019 216 242
- US-A1- 2006 232 071
- US-A1- 2007 051 112

## Beschreibung

Die Erfindung betrifft eine Anlage umfassend einen Dampferzeuger, einen Dampfverbraucher, wobei ein Ausgang des Dampferzeugers mit einem Eingang des Dampfverbrauchers strömungstechnisch verbunden ist.

Des Weiteren betrifft die Erfindung ein Verfahren zum Betreiben einer Anlage, wobei die Anlage mit einem Dampferzeuger und einem Dampfverbraucher ausgebildet wird, wobei der Dampferzeuger Dampf für den Dampfverbraucher erzeugt, wobei der Dampfverbraucher für einen ersten Betriebszustand mit einer ersten Dampfmenge und in einem zweiten Betriebszustand mit einer zweiten Dampfmenge ausgelegt wird, wobei die zweite Dampfmenge größer ist als die erste Dampfmenge.

Des Weiteren betrifft die Erfindung ein Verfahren zum Umrüsten einer bestehenden Dampfverbraucher-Anlage mit einem Dampferzeuger und einem Dampfverbraucher, wobei ein Dampf für den Dampfverbraucher mit dem Dampferzeuger erzeugt wird, wobei der Dampfverbraucher in einem ersten Betriebszustand eine erste Dampfmenge und in einem zweiten Betriebszustand eine zweite Dampfmenge benötigt, wobei die zweite Dampfmenge größer ist als die erste Dampfmenge, wobei der Dampferzeuger im Vollast-Betrieb die zweite Dampfmenge erzeugen kann, wobei eine Dampfturbine vorgesehen wird, die mit vom Dampfverbraucher nicht benötigten Dampf beaufschlagt wird.

Es existieren Anlagen, in denen ein Dampferzeuger Dampf für einen Dampfverbraucher erzeugt. Häufig wird in diesen Anlagen, in denen industrielle Prozesse ablaufen, Dampf als Arbeitsmedium oder zur Wärmeversorgung genutzt. Aufgrund der thermischen Eigenschaften von Wasser sind die meisten Dampferzeuger allerdings vergleichsweise träge Systeme, d.h. Änderungen der Dampf- oder Wärmemengen können nur relativ langsamen angepasst werden.

Es kann vorkommen, dass in einem Prozess Ereignisse eintreten können, bei denen eine große Dampf- und/oder Wärmemenge benötigt werden. Dies ist zum Beispiel in einem Störfall erforderlich.

Die Anlagen werden dabei derart betrieben, dass die für das Ereignis benötigte erhöhte Dampfmenge permanent vom Dampferzeuger erzeugt wird. Die Anlage wird mit anderen Worten in einem Zustand betrieben, bei dem ein Überschussproduktion an Dampf erfolgt.

Die Anlagen werden dabei derart betrieben, dass der Dampferzeuger vorsorglich permanent eine für einen Störfall passende Überschussmenge erzeugt.

Die für das Ereignis, beispielsweise den Störfall notwendige Dampfmenge wird dann in den meisten Fällen im Normalbetrieb in einer Dampfturbine expandiert, die dann beispielsweise zur Erzeugung von elektrischer Energie eingesetzt wird.

Sofern das Ereignis eintritt, kann durch ein vor der Dampfturbine angeordnetes Regelorgan, wie zum Beispiel einem Ventil die Dampfmenge in der Dampfturbine entsprechend reduziert werden. Dadurch kann ein Dampf zur Verfügung gestellt werden, der dann kurzfristig als Prozessdampf zum Dampfverbraucher geleitet wird.

Die Überproduktion an Dampf muss bisher durch das permanente zusätzliche Verbrennen fossiler Brennstoffe erzeugt werden. Die Überproduktion an Dampf kann beispielsweise durch einen fossil befeuerten Dampferzeuger, einen Abhitzekessel, einen elektrischen Überhitzer oder einer Brennstoffzelle erzeugt werden.

Bisher wird dieser Überschuss in den meisten Fällen nicht verworfen, sondern umgewandelt, z.B. in elektrische Energie. Allerdings ist aus wirtschaftlicher Sicht, die somit erzeugte elektrische Energie in den meisten Fällen nicht kostendeckend.

Mit dem Ausbau regenerativer Energien, dem Anstieg der CO₂ Preise usw. ist zu erwarten, dass sich dies zukünftig noch weiter verschlechtert.

Das Dokument DE 10 2019 216242 offenbart ein geschlossenes Dampfturbinen-System mit einer Einspritzvorrichtung zur Kühlung und Erhöhung des Dampfvorrats aus einer Wasserstoff-Sauerstoff-Verbrennung.

Das Dokument US 2006/232071 offenbart ein dampfbetriebenes Startgerät für Turbosätze.

Das Dokument US 2007/051112 offenbart ein dampfbetriebenes Startgerät für Turbosätze, bei dem ein Dampfgenerator verwendet, um Dampf bereitzustellen. Dies ermöglicht effiziente und häufige Starts mit reduziertem Platz- und Wartungsbedarf und verbessert die Kostenwirksamkeit sowie die Flexibilität des Betriebs von Turbosätzen.

Die Erfindung hat es sich ausgehend von den bekannten Problemen und Nachteilen des Standes der Technik zur Aufgabe gemacht eine Anlage und ein Verfahren anzugeben, mit der ein Kostenvorteil erzielt werden kann.

Die auf die Vorrichtung hin gerichtete Aufgabe wird durch den Patentanspruch 1 gelöst.

Die vom Patentanspruch 1 abhängigen und rückbezogenen Unteransprüche betreffen vorteilhafte Weiterbildungen der Erfindung.

Die auf das Verfahren hin gerichtete Aufgabe wird durch den Patentanspruch 7 gelöst.

Die vom Patentanspruch 7 abhängigen und rückbezogenen Unteransprüche betreffen vorteilhafte Weiterbildungen der Erfindung.

Die auf das Verfahren zum Umrüsten gerichtete Aufgabe wird durch den Patentanspruch 10 gelöst.

Die vom Patentanspruch 10 abhängigen und rückbezogenen Unteransprüche betreffen vorteilhafte Weiterbildungen der Erfindung.

Ein wesentliches Merkmal der Erfindung ist der Einsatz eines Schnelldampferzeugers. Dieser Schnelldampferzeuger, der auch als Steam Booster bezeichnet werden kann, ist zum Erzeugen von Dampf ausgebildet, wobei die im Schnelldampferzeuger erzeugte Dampfmenge im Vergleich zum dem Dampferzeuger sehr viel schneller erzeugt werden kann. Dazu wird beispielsweise ein Schnelldampferzeuger eingesetzt, der durch die Verbrennung von Wasserstoff Dampf und thermische Energie erzeugt. Bei der Verbrennung von Wasserstoff findet eine chemische Reaktion statt, bei der Wasserstoff und Sauerstoff miteinander reagieren, wobei nach der chemischen Reaktion Wasserdampf und thermische Energie erzeugt wird.

Die Erfindung geht darüber hinaus von dem Gedanken aus, dass eine ständige Überproduktion von Dampf entfallen kann und der Schnelldampferzeuger im Bedarfsfall die erhöhte Menge an Dampf zur Verfügung stellt. Optional kann der Dampferzeuger im Normalbetrieb in Teillast betrieben wird und dann im Störfall die erhöhte Menge in Volllast erreichen. Nach dem Erreichen der Volllast kann der Dampferzeuger die erhöhte Dampfmenge zur Verfügung stellen, wobei der Schnelldampferzeuger anschließend wieder abgeschaltet werden kann.

Bei der direkten Verbrennung von Wasserstoff und Sauerstoff wird der Phasenübergang (Sattdampfgebiet) übersprungen, so dass große Mengen an Wärme und / oder Dampf bei Temperaturen bis zu > 1300° sehr schnell erzeugt werden können. Da im Gegensatz zu bisherigen Systemen, die mit fossilen Brennstoffen betrieben werden, bei der direkten Verbrennung das Verbrennungsprodukt gleich dem Kreislaufmedium ist, entfallen bisher notwendige Wärmetauscher, wodurch besonders schnelle Lastwechsel ermöglicht werden.

Durch den Einsatz einer direkten Verbrennung von Wasserstoff und Sauerstoff zur Erzeugung von Dampf kann auf eine permanente Überproduktion von Dampf verzichtet werden oder diese zumindest stark reduziert werden. Somit kann der Energiebedarf der Systeme und gleichzeitig der Einsatz fossiler Brennstoffe stark reduziert werden. Der sonst durch die schnelle Reduktion der Dampfmenge durch die Dampfturbine bereitgestellte Prozessdampf wird hier durch eine direkte Verbrennung von Wasserstoff und Sauerstoff erzeugt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: Eine schematische Darstellung einer Anlage gemäß dem Stand der Technik
- Figur 2: Eine schematische Darstellung einer erfindungsgemäßen Anlage

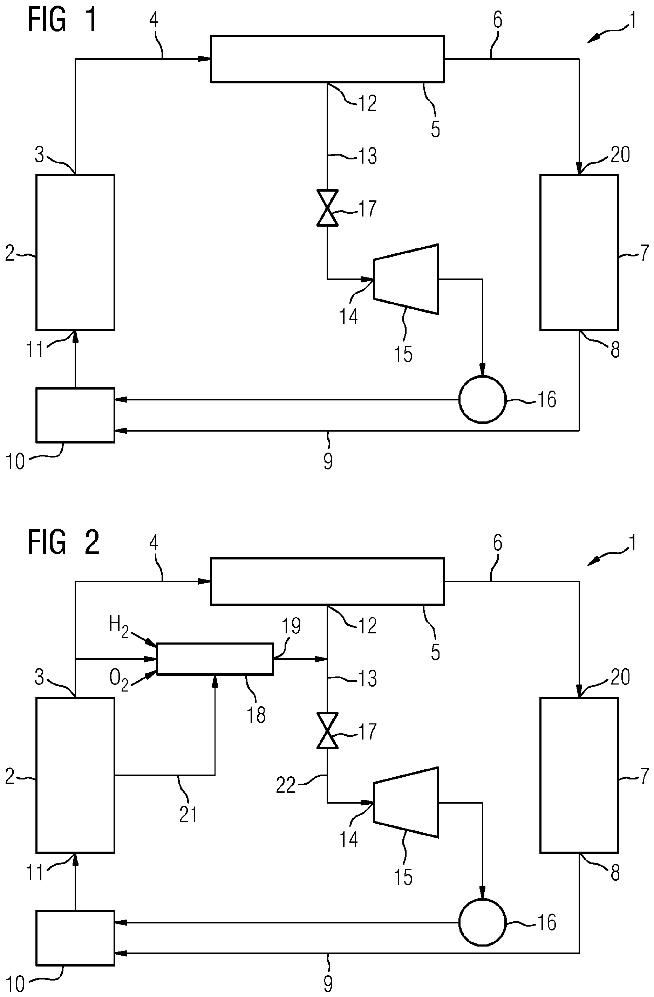

Die Figur 1 zeigt eine Anlage 1 gemäß dem Stand der Technik. Die Anlage 1 umfasst einen Dampferzeuger **2.** Der Dampferzeuger 2 ist zum Erzeugen von Dampf ausgebildet. Ein Ausgang 3 des Dampferzeugers 2 ist strömungstechnisch über eine erste Leitung 4 mit einer Sammelschiene 5 verbunden. Der in der Sammelschiene 5 befindliche Dampf wird über eine zweite Leitung 6 in einen Dampfverbraucher 7 geströmt.

Ein Ausgang 8 des Dampfverbrauchers 7 ist strömungstechnisch über die dritte Leitung 9 mit einem Wassertank 10 verbunden. Der Wassertank 10 ist wiederum strömungstechnisch mit einem Eingang 11 des Dampferzeugers 2 verbunden.

Die Sammelschiene 5 verfügt über einen weiteren Ausgang 12, der strömungstechnisch über eine vierte Leitung 13 mit einem Eingang 14 einer Dampfturbine 15 verbunden ist. In der Dampfturbine 15 wird die thermische Energie des Dampfes in Bewegungsenergie umgewandelt, wobei die Bewegungsenergie in elektrische Energie mittels Generatoren (nicht dargestellt) umgewandelt werden kann.

Der aus der Dampfturbine 15 ausströmende Dampf wird nun in einem Kondensator 16 wieder in Wasser umgewandelt. Das im Kondensator 16 umgewandelte Wasser strömt über den Wassertank 10 wieder in den Dampferzeuger **2.**

Die Anlage 1 gemäß dem Stand der Technik weist folgende Funktionsweise auf: Der Dampfverbraucher 7 weist zumindest zwei Betriebszustände auf. Im ersten Betriebszustand benötigt der Dampfverbraucher 7 eine erste Dampfmenge. Im zweiten Betriebszustand benötigt der Dampfverbraucher 7 eine zweite Dampfmenge. Die zweite Dampfmenge ist größer als die erste Dampfmenge.

Es ist nicht immer vorhersehbar, wann die Anlage 1, die im Dauerbetrieb im ersten Betriebszustand betrieben wird, in den zweiten Betriebszustand wechselt. In der Regel ist der Dampferzeuger 2 träge. Das bedeutet, dass die Erzeugung der zweiten Dampfmenge vergleichsweise lange dauert. Allerdings wird die zweite Dampfmenge im zweiten Betriebszustand schnell benötigt. Daher wird die für den zweiten Betriebszustand benötigte zweite Dampfmenge bereits im Dampferzeuger 2 erzeugt. Der im Dampfverbraucher 7 nicht benötigte Dampf wird über die Dampfturbine 15 geleitet.

Die Dampfmenge, die in die Dampfturbine 15 strömt, kann über ein Ventil 17 geregelt werden. Im zweiten Betriebszustand wird daher das Ventil 17 gedrosselt, so dass mehr Dampfmenge für den Dampfverbraucher 7 zur Verfügung steht.

Die Figur 2 zeigt nun eine verbesserte erfinderische Anlage 1. Ein Unterschied der Anlage 1 gemäß Figur 2 zu der Anlage 1 gemäß Figur 1 ist die Bereitstellung eines Schnelldampferzeugers 18. Der Schnelldampferzeuger 18 ist derart ausgebildet, dass dieser durch die Verbrennung von Wasserstoff Dampf und thermische Energie erzeugt. Ein Ausgang 19 des Schnelldampferzeugers 18 ist mit dem Eingang 20 des Dampfverbrauchers 7 verbunden. In alternativen Ausführungsformen wird aus der Dampfturbine 15 Dampf entnommen.

Der Dampferzeuger 2 ist zur Erzeugung von Dampf für den ersten Betriebszustand und für den zweiten Betriebszustand betreibbar, wobei der Schnelldampferzeuger 18 derart ausgebildet ist, dass dieser Dampf für den zweiten Betriebszustand erzeugt.

Die Bereitstellung des Dampfes aus dem Schnelldampferzeuger 18 erfolgt vergleichsweise schnell. In dem Schnelldampferzeuger erfolgt eine chemische Reaktion zwischen Wasserstoff und Sauerstoff, wobei Wasserdampf und thermische Energie erzeugt wird.

Der Dampferzeuger 2 ist wie in Figur 1 im ersten Betriebszustand für Teillast und im zweiten Betriebszustand für Volllast ausgelegt.

Die erfindungsgemäße Anlage 1 gemäß Figur 2 wird nun folgendermaßen betrieben: Im Dauerbetrieb oder im Nominalbetrieb wird der Dampferzeuger 2 in Teillast betrieben und liefert die erste Dampfmenge, die der Dampfverbraucher benötigt. Dies ist der erste Betriebszustand.

Ein Teil der Dampfmenge kann über die Dampfturbine 15 abgezweigt werden, wobei dadurch elektrische Energie erzeugbar ist.

Im zweiten Betriebszustand benötigt der Dampfverbraucher 7 die zweite Dampfenge. Zu einem ersten Zeitpunkt des zweiten Betriebszustand wird die zweite Dampfmenge durch den Dampferzeuger 2 und dem Schnelldampferzeuger 18 erzeugt. Die Erzeugung des Dampfes aus dem Schnelldampferzeuger 18 erfolgt vergleichsweise schnell. Gleichzeitig wird der Dampferzeuger 2 von Teillast auf Volllast umgestellt, so dass der Dampferzeuger 2 immer mehr Dampf erzeugt.

Sobald der Dampferzeuger 2 alleine die zweite Dampfmenge erzeugt, wird der Schnelldampferzeuger 18 wieder abgestellt. Demnach wird zu einem zweiten Zeitpunkt des zweiten Betriebszustandes die zweite Dampfmenge durch den Dampferzeuger 2 ohne dem Schnelldampferzeuger 18 erzeugt.

Die Dampfmenge, die in die Dampfturbine 15 strömt, wird über das Ventil 17 geregelt. Somit kann insgesamt die in den Dampfverbraucher 7 strömende Dampfmenge mit der Dampfturbine 15 geregelt werden.

In einer alternativen Ausführungsform kann eine Wasserleitung 21 vom Dampferzeuger 2 zu dem Schnelldampferzeuger 18 geführt werden. Das aus dieser Wasserleitung 21 geleitete Wasser kann durch die im Schnelldampferzeuger 18 erzeugte thermische Energie in Dampf umgewandelt werden. Dadurch kann eine noch größere Dampfmenge schnell und einfach zur Verfügung gestellt werden.

Die erfindungsgemäße Idee eignet sich bestehende Anlagen, bei denen eine erste und zweite Dampfmenge in einem Dampfverbraucher 7 benötigt wird, umzurüsten. Dazu muss der Schnelldampferzeuger 18 zusätzlich in eine bestehende Anlage installiert werden. Die bestehenden Komponenten, wie zum Beispiel der Dampferzeuger 2 oder die Dampfturbine 15 müssen in der Regel nicht ausgetauscht werden. Durch diese Umrüstung ändert sich die Fahrweise des Dampferzeugers 2, was zu einer Kostenersparnis führt.

## Patentansprüche

1. Anlage (1) umfassend
einen Dampferzeuger (2) und einen Dampfverbraucher (7), wobei ein Ausgang (3) des Dampferzeugers (2) mit einem Eingang (20) des Dampfverbrauchers (7) strömungstechnisch verbunden ist,
wobei ein Ausgang (3) des Dampferzeugers (2) strömungstechnisch über eine erste Leitung (4) mit einer Sammelschiene (5) verbunden ist,
wobei der in der Sammelschiene (5) befindliche Dampf über eine zweite Leitung (6) in den Dampfverbraucher (7) geströmt wird,
wobei die Sammelschiene (5) einen weiteren Ausgang (12) aufweist, der strömungstechnisch über eine vierte Leitung (13) mit einem Eingang (14) einer Dampfturbine (15) verbunden ist,und ferner umfassend einen Schnelldampferzeuger (18), der durch die Verbrennung von Wasserstoff Dampf erzeugt, wobei ein Ausgang (19) des Schnelldampferzeugers (18) über die Sammelschiene (5) mit dem Eingang (20) des Dampfverbrauchers (7) verbunden ist, wobei der Dampfverbraucher (7) in einem ersten Betriebszustand für einen erste Dampfmenge und in einem zweiten Betriebszustand für eine zweite Dampfmenge ausgelegt ist,
wobei die zweite Dampfmenge größer ist als die erste Dampfmenge,
wobei der Dampferzeuger (2) zur Erzeugung von Dampf für den ersten Betriebszustand und zweiten Betriebszustand betreibbar ist,
wobei der Schnelldampferzeuger (18) derart ausgebildet ist, dass dieser Dampf für den zweiten Betriebszustand erzeugt, wobei der erste Betriebszustand als Teillast und der zweite Betriebszustand als Volllast für den Dampferzeuger (2) ausgelegt ist,
wobei im ersten Betriebszustand die erste Dampfmenge durch den Dampferzeuger (2) erzeugt wird und in einem ersten Zeitpunkt des zweiten Betriebszustand die zweite Dampfmenge durch den Dampferzeuger (2) und dem Schnelldampferzeuger (18) erzeugt wird und in einem zweiten Zeitpunkt des zweiten Betriebszustandes die zweite Dampfmenge durch den Dampferzeuger (2) ohne dem Schnelldampferzeuger (18) erzeugt wird.

2. Anlage (1) nach Anspruch 1,
ferner umfassend eine Dampfturbine (15), wobei der Eingang (14) der Dampfturbine (15) mit einem Ausgang (3) des Dampferzeugers (2) und des Schnelldampferzeugers (18) über eine Dampfleitung (22) strömungstechnisch verbunden ist.

3. Anlage (1) nach Anspruch 2,
wobei der Ausgang der Dampfturbine (15) strömungstechnisch mit dem Eingang eines Kondensators (16) verbunden ist,
wobei der Ausgang des Kondensators (16) strömungstechnisch mit dem Eingang (11) des Dampferzeugers (2) verbunden ist.

4. Anlage (1) nach Anspruch 2 oder 3,
wobei der Ausgang (8) des Dampfverbrauchers (7) mit dem Eingang (11) des Dampferzeugers (2) verbunden ist.

5. Anlage (1) nach einem der Ansprüche 2 bis 4,
wobei in der Dampfleitung (22) ein Ventil (17) angeordnet ist, wobei mit dem Ventil (17) eine Regelung der Dampfmenge zu dem Dampfverbraucher (7) erreichbar ist.

6. Anlage (1) nach einem der vorhergehenden Ansprüche, wobei der Schnelldampferzeuger (18) mit einer Wasserleitung (21) verbunden ist und der Schnelldampferzeuger (18) derart ausgebildet ist, dass das Wasser aus der Wasserleitung (21) in Dampf durch die Erzeugung von thermischer Energie im Schnelldampferzeuger (18) umwandelbar ist.

7. Verfahren zum Betreiben einer Anlage (1),
wobei die Anlage (1) mit einem Dampferzeuger (2) und einem Dampfverbraucher (7) ausgebildet wird,
wobei der Dampferzeuger (2) Dampf für den Dampfverbraucher (7) erzeugt,
wobei ein Ausgang (3) des Dampferzeugers (2) strömungstechnisch über eine erste Leitung (4) mit einer Sammelschiene (5) verbunden ist,
wobei der in der Sammelschiene (5) befindliche Dampf über eine zweite Leitung (6) in den Dampfverbraucher (7) geströmt wird,
wobei die Sammelschiene (5) einen weiteren Ausgang (12) aufweist, der strömungstechnisch über eine vierte Leitung (13) mit einem Eingang (14) einer Dampfturbine (15) verbunden ist,
wobei der Dampfverbraucher (7) für einen ersten Betriebszustand mit einer ersten Dampfmenge und in einem zweiten Betriebszustand mit einer zweiten Dampfmenge ausgelegt wird,
wobei die zweite Dampfmenge größer ist als die erste Dampfmenge,
wobei ein Schnelldampferzeuger (18) eingesetzt wird, der durch die Verbrennung von Wasserstoff Dampf für den Dampfverbraucher (7) erzeugt,
wobei der Dampf für den ersten Betriebszustand durch den Dampferzeuger (2) erzeugt wird,
wobei beim Wechsel vom ersten Betriebszustand in den zweiten Betriebszustand der Dampf für den Dampfverbraucher (7) vom Dampferzeuger (2) und dem Schnelldampferzeuger (18) erzeugt wird,
wobei der Dampferzeuger (2) im ersten Betriebszustand in Teillast betrieben wird.
wobei der Dampferzeuger (2) im zweiten Betriebszustand in Volllast betrieben wird.
wobei der Schnelldampferzeuger (18) bis zum Erreichen der Volllast des Dampferzeugers (2) Dampf für den zweiten Betriebszustand erzeugt.
wobei nach Erreichen der Volllast des Dampferzeugers (2) der Schnelldampferzeuger (18) abgeschaltet wird.

8. Verfahren nach Anspruch 7,
wobei die Anlage (1) mit einer Dampfturbine (15) ausgebildet wird, wobei die Dampfturbine (15) mit Dampf aus dem Dampferzeuger (2) und dem Schnelldampferzeuger (18) versorgt wird.

9. Verfahren nach Anspruch 8,
wobei die Dampfmenge in die Dampfturbine (15) über ein Ventil (17) geregelt wird, wobei das Ventil (17) vor dem Eingang (14) der Dampfturbine (15) angeordnet wird.

10. Verfahren zum Umrüsten einer bestehenden Dampfverbraucher-Anlage mit einem Dampferzeuger (2) und einem Dampfverbraucher (7),
wobei ein Ausgang (3) des Dampferzeugers (2) strömungstechnisch über eine erste Leitung (4) mit einer Sammelschiene (5) verbunden ist,
wobei der in der Sammelschiene (5) befindliche Dampf über eine zweite Leitung (6) in den Dampfverbraucher (7) geströmt wird,
wobei die Sammelschiene (5) einen weiteren Ausgang (12) aufweist, der strömungstechnisch über eine vierte Leitung (13) mit einem Eingang (14) einer Dampfturbine (15) verbunden ist,
wobei ein Dampf für den Dampfverbraucher (7) von dem Dampferzeuger (2) erzeugt wird, wobei der Dampfverbraucher (7) in einem ersten Betriebszustand eine erste Dampfmenge benötigt und in einem zweiten Betriebszustand eine zweite Dampfmenge benötigt, wobei die zweite Dampfmenge größer ist als die erste Dampfmenge,
wobei der Dampferzeuger (2) im Vollast-Betrieb die zweite Dampfmenge erzeugen kann, wobei eine Dampfturbine (15) vorgesehen wird, die mit vom Dampfverbraucher (7) nicht benötigten Dampf beaufschlagt wird,
**dadurch gekennzeichnet, dass**
ein Schnelldampferzeuger (18) eingesetzt wird, der einen zusätzliche Dampf für den Dampfverbraucher (7) erzeugt, wobei ein Ausgang (19) des Schnelldampferzeugers (18) über die Sammelschiene (5) mit dem Eingang (20) des Dampfverbrauchers (7) verbunden ist.

11. Verfahren nach Anspruch 10,
wobei der Dampferzeuger (2) im ersten Betriebszustand in einer Teillast betrieben wird und der Schnelldampferzeuger (18) keinen Dampf erzeugt.

12. Verfahren nach Anspruch 10,
wobei der Dampferzeuger (2) im zweiten Betriebszustand in einer Volllast betrieben wird und der Schnelldampferzeuger (18) Dampf für den Dampfverbraucher (7) so lange erzeugt, bis der Dampferzeuger (2) im Volllast-Betrieb die zweite Dampfmenge erzeugen kann.

## Claims

1. An installation (1) comprising
a steam generator (2) and a steam consumer (7), wherein an outlet (3) of the steam generator (2) is fluidically connected to an inlet (20) of the steam consumer (7),
wherein an outlet (3) of the steam generator (2) is fluidically connected to a busbar (5) via a first line (4),
wherein the steam located in the busbar (5) flows into the steam consumer (7) via a second line (6),
wherein the busbar (5) has a further outlet (12) which is fluidically connected to an inlet (14) of a steam turbine (15) via a fourth line (13), and further comprising a quick steam generator (18) generating steam by combusting hydrogen, wherein an outlet (19) of the quick steam generator (18) is connected to the inlet (20) of the steam consumer (7) via the busbar (5), wherein the steam consumer (7), in a first operating state, is designed for a first amount of steam and, in a second operating state, is designed for a second amount of steam,
wherein the second amount of steam is greater than the first amount of steam,
wherein the steam generator (2) is operable to generate steam for the first operating state and the second operating state,
wherein the quick steam generator (18) is configured such that it generates steam for the second operating state, wherein the first operating state is designed as a partial load and the second operating state is designed as a full load for the steam generator (2),
wherein, in the first operating state, the first amount of steam is generated by the steam generator (2), and, at a first time of the second operating state, the second amount of steam is generated by the steam generator (2) and the quick steam generator (18), and, at a second time of the second operating state, the second amount of steam is generated by the steam generator (2) without the quick steam generator (18).

2. The installation (1) according to claim 1,
further comprising a steam turbine (15), wherein the inlet (14) of the steam turbine (15) is fluidically connected to an outlet (3) of the steam generator (2) and of the quick steam generator (18) via a steam line (22).

3. The installation (1) according to claim 2,
wherein the outlet of the steam turbine (15) is fluidically connected to the inlet of a condenser (16),
wherein the outlet of the condenser (16) is fluidically connected to the inlet (11) of the steam generator (2).

4. The installation (1) according to claim 2 or 3,
wherein the outlet (8) of the steam consumer (7) is connected to the inlet (11) of the steam generator (2).

5. The installation (1) according to any one of claims 2 to 4,
wherein a valve (17) is arranged in the steam line (22), wherein, using the valve (17), control of the amount of steam to the steam consumer (7) is achievable.

6. The installation (1) according to any one of the preceding claims,
wherein the quick steam generator (18) is connected to a water line (21), and the quick steam generator (18) is configured such that the water from the water line (21) is convertible into steam by generating thermal energy in the quick steam generator (18).

7. A method for operating an installation (1),
wherein the installation (1) is configured with a steam generator (2) and a steam consumer (7), wherein the steam generator (2) generates steam for the steam consumer (7),
wherein an outlet (3) of the steam generator (2) is fluidically connected to a busbar (5) via a first line (4),
wherein the steam located in the busbar (5) flows into the steam consumer (7) via a second line (6),
wherein the busbar (5) has a further outlet (12) which is fluidically connected to an inlet (14) of a steam turbine (15) via a fourth line (13),
wherein the steam consumer (7) is designed for a first operating state with a first amount of steam and, in a second operating state, is designed with a second amount of steam,
wherein the second amount of steam is greater than the first amount of steam,
wherein a quick steam generator (18) is employed generating steam for the steam consumer (7) by combusting hydrogen,
wherein the steam for the first operating state is generated by the steam generator (2),
wherein, upon switching from the first operating state to the second operating state, the steam for the steam consumer (7) is generated by the steam generator (2) and the quick steam generator (18),
wherein the steam generator (2) is operated at partial load in the first operating state.
wherein the steam generator (2) is operated at full load in the second operating state.
wherein the quick steam generator (18) generates steam for the second operating state until the full load of the steam generator (2) is reached.
wherein the quick steam generator (18) is switched off upon reaching the full load of the steam generator (2).

8. The method according to claim 7,
wherein the installation (1) is configured with a steam turbine (15), wherein the steam turbine (15) is supplied with steam from the steam generator (2) and the quick steam generator (18).

9. The method according to claim 8,
wherein the amount of steam into the steam turbine (15) is controlled via a valve (17), wherein the valve (17) is arranged upstream of the inlet (14) of the steam turbine (15).

10. A method for modifying an existing steam consumer installation with a steam generator (2) and a steam consumer (7),
wherein an outlet (3) of the steam generator (2) is fluidically connected to a busbar (5) via a first line (4),
wherein the steam located in the busbar (5) flows into the steam consumer (7) via a second line (6),
wherein the busbar (5) has a further outlet (12) which is fluidically connected to an inlet (14) of a steam turbine (15) via a fourth line (13),
wherein a steam for the steam consumer (7) is generated by the steam generator (2), wherein the steam consumer (7), in a first operating state, requires a first amount of steam and, in a second operating state, requires a second amount of steam, wherein the second amount of steam is greater than the first amount of steam, wherein the steam generator (2) can generate the second amount of steam in full load operation, wherein a steam turbine (15) is provided which is pressurized with steam not required by the steam consumer (7), **characterized in that** a quick steam generator (18) is employed generating an additional steam for the steam consumer (7), wherein an outlet (19) of the quick steam generator (18) is connected to the inlet (20) of the steam consumer (7) via the busbar (5).

11. The method according to claim 10,
wherein, in the first operating state, the steam generator (2) is operated at partial load and the quick steam generator (18) does not generate any steam.

12. The method according to claim 10,
wherein, in the second operating state, the steam generator (2) is operated at a full load and the quick steam generator (18) generates steam for the steam consumer (7) until the steam generator (2) can generate the second amount of steam in full load operation.

## Revendications

1. Installation (1) comprenant
un générateur de vapeur (2) et un consommateur de vapeur (7), dans laquelle une sortie (3) du générateur de vapeur (2) est reliée de manière fluidique à une entrée (20) du consommateur de vapeur (7),
dans laquelle une sortie (3) du générateur de vapeur (2) est reliée de manière fluidique, par l'intermédiaire d'une première conduite (4), à un collecteur (5),
dans laquelle la vapeur se trouvant dans le collecteur (5) est acheminée par l'intermédiaire d'une deuxième conduite (6) dans le consommateur de vapeur (7),
dans laquelle le collecteur (5) présente une sortie supplémentaire (12), qui est reliée de manière fluidique, par l'intermédiaire d'une quatrième conduite (13), à une entrée (14) d'une turbine à vapeur (15), et comprenant en outre un générateur de vapeur instantané (18) qui génère de la vapeur par la combustion d'hydrogène, dans laquelle une sortie (19) du générateur de vapeur instantané (18) est reliée, par l'intermédiaire du collecteur (5), à l'entrée (20) du consommateur de vapeur (7), dans laquelle le consommateur de vapeur (7) est conçu, dans un premier état de fonctionnement, pour une première quantité de vapeur et, dans un deuxième état de fonctionnement, pour une deuxième quantité de vapeur,
dans laquelle la deuxième quantité de vapeur est supérieure à la première quantité de vapeur,
dans laquelle le générateur de vapeur (2) est apte à être actionné pour la génération de vapeur pour le premier état de fonctionnement et le deuxième état de fonctionnement,
dans laquelle le générateur de vapeur instantané (18) est conçu de telle sorte qu'il génère de la vapeur pour le deuxième état de fonctionnement, dans laquelle le premier état de fonctionnement est conçu comme une charge partielle et le deuxième état de fonctionnement comme une pleine charge pour le générateur de vapeur (2),
dans laquelle, dans le premier état de fonctionnement, la première quantité de vapeur est générée par le générateur de vapeur (2) et, à un premier instant du deuxième état de fonctionnement, la deuxième quantité de vapeur est générée par le générateur de vapeur (2) et le générateur de vapeur instantané (18) et, à un deuxième instant du deuxième état de fonctionnement, la deuxième quantité de vapeur est générée par le générateur de vapeur (2) sans le générateur de vapeur instantané (18).

2. Installation (1) selon la revendication 1,
comprenant en outre une turbine à vapeur (15), dans laquelle l'entrée (14) de la turbine à vapeur (15) est reliée de manière fluidique à une sortie (3) du générateur de vapeur (2) et du générateur de vapeur instantané (18) par l'intermédiaire d'une conduite de vapeur (22).

3. Installation (1) selon la revendication 2,
dans laquelle la sortie de la turbine à vapeur (15) est reliée de manière fluidique à l'entrée d'un condenseur (16),
dans laquelle la sortie du condenseur (16) est reliée de manière fluidique à l'entrée (11) du générateur de vapeur (2).

4. Installation (1) selon la revendication 2 ou 3,
dans laquelle la sortie (8) du consommateur de vapeur (7) est reliée à l'entrée (11) du générateur de vapeur (2).

5. Installation (1) selon l'une quelconque des revendications 2 à 4,
dans laquelle une vanne (17) est disposée dans la conduite de vapeur (22), dans laquelle une régulation de la quantité de vapeur vers le consommateur de vapeur (7) peut être obtenue au moyen de la vanne (17).

6. Installation (1) selon l'une quelconque des revendications précédentes,
dans laquelle le générateur de vapeur instantané (18) est relié à une conduite d'eau (21) et le générateur de vapeur instantané (18) est conçu de telle sorte que l'eau provenant de la conduite d'eau (21) soit transformable en vapeur par la génération d'énergie thermique dans le générateur de vapeur instantané (18).

7. Procédé pour le fonctionnement d'une installation (1),
dans lequel l'installation (1) est réalisée avec un générateur de vapeur (2) et un consommateur de vapeur (7), dans lequel le générateur de vapeur (2) génère de la vapeur pour le consommateur de vapeur (7),
dans lequel une sortie (3) du générateur de vapeur (2) est reliée de manière fluidique, par l'intermédiaire d'une première conduite (4), à un collecteur (5),
dans lequel la vapeur se trouvant dans le collecteur (5) est acheminée par l'intermédiaire d'une deuxième conduite (6) dans le consommateur de vapeur (7),
dans lequel le collecteur (5) présente une sortie supplémentaire (12), qui est reliée de manière fluidique, par l'intermédiaire d'une quatrième conduite (13), à une entrée (14) d'une turbine à vapeur (15),
dans lequel le consommateur de vapeur (7) est conçu pour un premier état de fonctionnement avec une première quantité de vapeur et, dans un deuxième état de fonctionnement, avec une deuxième quantité de vapeur,
dans lequel la deuxième quantité de vapeur est supérieure à la première quantité de vapeur,
dans lequel un générateur de vapeur instantané (18) est mis en œuvre, lequel génère de la vapeur pour le consommateur de vapeur (7) par la combustion d'hydrogène,
dans lequel la vapeur pour le premier état de fonctionnement est générée par le générateur de vapeur (2),
dans lequel, lors du passage du premier état de fonctionnement au deuxième état de fonctionnement, la vapeur pour le consommateur de vapeur (7) est générée par le générateur de vapeur (2) et le générateur de vapeur instantané (18),
dans lequel le générateur de vapeur (2) est actionné en charge partielle dans le premier état de fonctionnement.
dans lequel le générateur de vapeur (2) est actionné en pleine charge dans le deuxième état de fonctionnement.
dans lequel le générateur de vapeur instantané (18) génère de la vapeur pour le deuxième état de fonctionnement jusqu'à ce que la pleine charge du générateur de vapeur (2) soit atteinte.
dans lequel, après que la pleine charge du générateur de vapeur (2) a été atteinte, le générateur de vapeur instantané (18) est arrêté.

8. Procédé selon la revendication 7,
dans lequel l'installation (1) est réalisée avec une turbine à vapeur (15), dans lequel la turbine à vapeur (15) est alimentée par de la vapeur provenant du générateur de vapeur (2) et du générateur de vapeur instantané (18).

9. Procédé selon la revendication 8,
dans lequel la quantité de vapeur dans la turbine à vapeur (15) est régulée par l'intermédiaire d'une vanne (17), dans lequel la vanne (17) est disposée en amont de l'entrée (14) de la turbine à vapeur (15).

10. Procédé de modernisation d'une installation de consommation de vapeur existante comprenant un générateur de vapeur (2) et un consommateur de vapeur (7),
dans lequel une sortie (3) du générateur de vapeur (2) est reliée de manière fluidique, par l'intermédiaire d'une première conduite (4), à un collecteur (5),
dans lequel la vapeur se trouvant dans le collecteur (5) est acheminée par l'intermédiaire d'une deuxième conduite (6) dans le consommateur de vapeur (7),
dans lequel le collecteur (5) présente une sortie supplémentaire (12), qui est reliée de manière fluidique, par l'intermédiaire d'une quatrième conduite (13), à une entrée (14) d'une turbine à vapeur (15),
dans lequel une vapeur pour le consommateur de vapeur (7) est générée par le générateur de vapeur (2), dans lequel le consommateur de vapeur (7) nécessite, dans un premier état de fonctionnement, une première quantité de vapeur et nécessite, dans un deuxième état de fonctionnement, une deuxième quantité de vapeur, dans lequel la deuxième quantité de vapeur est supérieure à la première quantité de vapeur, dans lequel le générateur de vapeur (2) peut générer la deuxième quantité de vapeur en fonctionnement à pleine charge, dans lequel une turbine à vapeur (15) est prévue, laquelle est alimentée par de la vapeur non requise par le consommateur de vapeur (7), **caractérisé en ce qu'**un générateur de vapeur instantané (18) est mis en œuvre, lequel génère une vapeur supplémentaire pour le consommateur de vapeur (7), dans lequel une sortie (19) du générateur de vapeur instantané (18) est reliée, par l'intermédiaire du collecteur (5), à l'entrée (20) du consommateur de vapeur (7).

11. Procédé selon la revendication 10,
dans lequel le générateur de vapeur (2) est actionné en charge partielle dans le premier état de fonctionnement et le générateur de vapeur instantané (18) ne génère pas de vapeur.

12. Procédé selon la revendication 10,
dans lequel le générateur de vapeur (2) est actionné en pleine charge dans le deuxième état de fonctionnement et le générateur de vapeur instantané (18) génère de la vapeur pour le consommateur de vapeur (7) jusqu'à ce que le générateur de vapeur (2) puisse générer la deuxième quantité de vapeur en fonctionnement à pleine charge.
